# EUROPEAN PATENT APPLICATION

(11) **EP 4 615 034 A1**
(43) Date of publication of application: **10.09.2025**
(21) Application number: 23884516.8
(22) Date of filing: 26.09.2023
(51) Int. Cl.: H04W 24/02, H04W 76/10

(54) **INFORMATION INTERACTION METHOD AND APPARATUS**

(30) Priority: 02.11.2022 CN 202211362907
(71) Applicant: Datang Mobile Communications Equipment Co., Ltd., Beijing 100085 (CN)
(72) Inventor: GU, Xiaofei, Beijing 100085 (CN); CHENG, Zhimi, Beijing 100085 (CN)
(74) Representative: Studio Torta S.p.A.
(86) International application number: PCT/CN2023/121591
(87) International publication number: WO 2024/093584

(57) **Abstract**

This application provides a method and a device for information interaction, relating to the field of communication technologies. The method comprises: obtaining, by a first device, first information of a physical network entity, wherein the first information comprises at least one of the following: control plane information, user plane information, and terminal-related information; and transmitting, by the first device, the first information and/or an instruction corresponding to the first information to a network element of a digital twin network entity.

## Description

### CROSS-REFERENCE TO RELATED APPLICATIONS

This application claims priority to Chinese Patent Application No. 202211362907.3, filed with the China National Intellectual Property Administration on November 2, 2022, entitled "Method and Apparatus for Information Interaction," the entire contents of which are incorporated herein by reference.

### TECHNICAL FIELD

The present disclosure relates to the field of communication technologies, and in particular, to a method and an apparatus for information interaction.

### BACKGROUND

With the advancement of networks and the dual driving forces of service-oriented scenarios and technological development, the architecture of the sixth-generation (6G) mobile communication network has undergone significant changes to accommodate emerging service scenarios. One notable change is the integration of the physical network entity with a digital twin network entity, enabling a near-perfect replication of the physical network.

While digital twin technology has been relatively mature in fields such as aerospace and industrial applications, how to realize information interaction between the physical network entity and the digital twin network entity in a 6G network remains a pressing issue. Specifically, under the premise that the physical network entity and the digital twin network entity have been established, how to transmit information from the physical network entity to the digital twin network entity, thereby achieving a one-to-one or on-demand replication of the physical network entity, is an urgent problem to be addressed.

### SUMMARY

The The present disclosure aims to provide a method and an apparatus for information interaction, so as to address the problem of how to realize information interaction between a physical network entity and a digital twin network entity.

To achieve the above objective, an embodiment of the present disclosure provides an information interaction method, including:
a first device obtains first information of a physical network entity, wherein the first information includes at least one of the following: control plane information, user plane information, and terminal-related information;
the first device sends the first information and/or an instruction corresponding to the first information to a network element of the digital twin network entity;
wherein the first device includes at least one of the following:
   a first management system configured to manage the physical network entity and a second management system configured to manage the digital twin network entity, wherein a first interface is provided between the first management system and the second management system;
   an information interaction device, wherein a second interface is provided between the information interaction device and the digital twin network entity, and a third interface is provided between the information interaction device and the physical network entity;
   a first network element and a second network element of the digital twin network entity, wherein the first network element is configured to perform network element service discovery for network elements of the physical network entity, and the second network element is configured to subscribe to event exposure services of the network elements of the physical network entity;
   a third network element of the physical network entity and a fourth network element of the digital twin network entity, wherein the third network element is configured to perform service discovery and event exposure service subscription for network elements of the physical network entity, and information interaction is supported between the third network element and the fourth network element.

Optionally, the first device obtains the first information of the physical network entity by:
sending a first request to a first target network element and receiving a first response fed back by the first target network element based on the first request, wherein the first response includes the first information; or
receiving a second request sent by the first target network element, wherein the second request includes the first information;
wherein the first target network element is a network element of the physical network entity.

Optionally, the first response or the second request is used to send the first information corresponding to all network elements stored by the first target network element.

Optionally, when the first target network element is a session management function network element and the first information includes user plane information, the session management function network element is configured to obtain user plane topology information.

Optionally, when the first device includes the first management system and the second management system,
the first device sends the first information to a network element of the digital twin network entity, including:
The second management system, after receiving the first information sent by the first management system through the first interface, sends the first information and/or an instruction corresponding to the first information to a network element of the digital twin network entity.

Optionally, the information interaction device is used to manage the physical network entity and the digital twin network entity, or is used to store data information; when the first device includes the information interaction device,
the first device obtains first information of the physical network entity, including:
the information interaction device performs at least one of the following operations through the third interface:
   sending the first request and receiving the first response;
   receiving the second request.

Optionally, the operation of the first device sending the first information and/or an instruction corresponding to the first information to a network element of the digital twin network entity includes:
the information interaction device sends the first information and/or the instruction corresponding to the first information to the network element of the digital twin network entity through the second interface in a data format required by the second interface.

Optionally, the first request is a query request.

Optionally, when the first device includes the first network element and the second network element, the first request includes a network element service discovery request and/or an event exposure service subscription request;
the first device sends the first request to a first target network element and receives a first response fed back by the first target network element based on the first request, including at least one of the following:
the first network element sends a network element service discovery request to a fifth network element and receives a network element service discovery response fed back by the fifth network element, wherein the network element service discovery response carries the control plane information;
the second network element sends an event exposure service subscription request to a sixth network element and receives an event exposure service subscription response fed back by the sixth network element, wherein the event exposure service subscription response carries the user plane information;
wherein the fifth network element and the sixth network element belong to the first target network element, and the sixth network element allows event exposure service subscription.

Optionally, when the first network element is a network storage function network element, the network storage function network element is configured to proactively send information and/or instructions to a second target network element of the digital twin network entity.

Optionally, when the first device includes the third network element and the fourth network element, the first request includes a network element service discovery request and/or an event exposure service subscription request.

The first device sends the first request to a first target network element and receives a first response fed back by the first target network element based on the first request, including at least one of the following:
the third network element sends a network element service discovery request to a seventh network element and receives a network element service discovery response fed back by the seventh network element, wherein the network element service discovery response carries the control plane information;
the third network element sends an event exposure service subscription request to an eighth network element and receives an event exposure service subscription response fed back by the eighth network element, wherein the event exposure service subscription response carries the user plane information;
wherein the seventh network element and the eighth network element belong to the first target network element, and the eighth network element allows event exposure service subscription.

Optionally, the operation of the first device sending the first information and/or an instruction corresponding to the first information to a network element of the digital twin network entity includes:
the fourth network element, after receiving the first information sent by the third network element, sends the first information and/or the instruction corresponding to the first information to a second target network element;
wherein the second target network element is a network element of the digital twin network entity.

Optionally, the first information is information when the physical network entity undergoes changes.

Optionally, the control plane information includes at least one of the following:
network element status;
network element identifier.

Optionally, the user plane information includes at least one of the following:
forwarding device identifier;
link information;
port number;
port status.

Optionally, the terminal-related information includes at least one of the following:
terminal status;
terminal identifier;
number of terminals;
number of terminal sessions;
session ID;
user plane path.

To achieve the above objective, an embodiment of the present disclosure further provides an information interaction apparatus, which is applied to a first device, and includes: a memory, a transceiver, and a processor;
the memory is used to store program instructions; the transceiver is used to transmit and receive data under the control of the processor; the processor is configured to read the program instructions stored in the memory, and the transceiver is configured to perform the following operations:
obtaining first information of a physical network entity, wherein the first information includes at least one of the following: control plane information, user plane information, and terminal-related information;
sending the first information and/or an instruction corresponding to the first information to a network element of the digital twin network entity;
wherein the first device includes at least one of the following:
   a first management system configured to manage the physical network entity and a second management system configured to manage the digital twin network entity, wherein a first interface is provided between the first management system and the second management system;
   an information interaction device, wherein a second interface is provided between the information interaction device and the digital twin network entity, and a third interface is provided between the information interaction device and the physical network entity;
   a first network element and a second network element of the digital twin network entity, wherein the first network element is configured to perform network element service discovery for network elements of the physical network entity, and the second network element is configured to subscribe to event exposure services of the network elements of the physical network entity;
   a third network element of the physical network entity and a fourth network element of the digital twin network entity, wherein the third network element is configured to perform service discovery and event exposure service subscription for network elements of the physical network entity, and information interaction is supported between the third network element and the fourth network element.

To achieve the above objective, an embodiment of the present disclosure further provides an information interaction apparatus, which is applied to a first device, and includes:
an acquiring module, configured to obtain first information of a physical network entity, wherein the first information includes at least one of the following: control plane information, user plane information, and terminal-related information;
a sending module, configured to send the first information and/or an instruction corresponding to the first information to a network element of the digital twin network entity;
wherein the first device includes at least one of the following:
   a first management system configured to manage the physical network entity and a second management system configured to manage the digital twin network entity, wherein a first interface is provided between the first management system and the second management system;
   an information interaction device, wherein a second interface is provided between the information interaction device and the digital twin network entity, and a third interface is provided between the information interaction device and the physical network entity;
   a first network element and a second network element of the digital twin network entity, wherein the first network element is configured to perform network element service discovery for network elements of the physical network entity, and the second network element is configured to subscribe to event exposure services of the network elements of the physical network entity;
   a third network element of the physical network entity and a fourth network element of the digital twin network entity, wherein the third network element is configured to perform service discovery and event exposure service subscription for network elements of the physical network entity, and information interaction is supported between the third network element and the fourth network element.

To achieve the above objective, an embodiment of the present disclosure further provides a processor-readable storage medium, where the processor-readable storage medium stores program instructions, and the program instructions are configured to enable the processor to execute the information interaction method as described above.

The above technical solutions of the present disclosure have at least the following beneficial effects:
In the technical solution of the embodiment of the present disclosure, the first device obtains first information of the physical network entity, including at least one of control plane information, user plane information, and terminal-related information, and then sends the first information and/or an instruction corresponding to the first information to a network element of the digital twin network entity, thereby establishing an information exchange bridge between the physical network entity and the digital twin network entity, and realizing information interaction between the physical network entity and the digital twin network entity.

### BRIEF DESCRIPTION OF THE DRAWINGS

FIG. 1 shows a schematic flowchart of the method according to an embodiment of the present disclosure.
FIG. 2 shows a first schematic application diagram of the method according to an embodiment of the present disclosure.
FIG. 3 shows a second schematic application diagram of the method according to an embodiment of the present disclosure.
FIG. 4 shows a third schematic application diagram of the method according to an embodiment of the present disclosure.
FIG. 5 shows a fourth schematic application diagram of the method according to an embodiment of the present disclosure.
FIG. 6 shows a fifth schematic application diagram of the method according to an embodiment of the present disclosure.
FIG. 7 shows a sixth schematic application diagram of the method according to an embodiment of the present disclosure.
FIG. 8 shows a seventh schematic application diagram of the method according to an embodiment of the present disclosure.
FIG. 9 shows an eighth schematic application diagram of the method according to an embodiment of the present disclosure.
FIG. 10 shows a ninth schematic application diagram of the method according to an embodiment of the present disclosure.
FIG. 11 shows a tenth schematic application diagram of the method according to an embodiment of the present disclosure.
FIG. 12 shows an eleventh schematic application diagram of the method according to an embodiment of the present disclosure.
FIG. 13 shows a twelfth schematic application diagram of the method according to an embodiment of the present disclosure.
FIG. 14 shows a thirteenth schematic application diagram of the method according to an embodiment of the present disclosure.
FIG. 15 shows a fourteenth schematic application diagram of the method according to an embodiment of the present disclosure.
FIG. 16 shows a structural block diagram of the apparatus according to an embodiment of the present disclosure.
FIG. 17 shows a schematic module diagram of the apparatus according to an embodiment of the present disclosure.

### DETAILED DESCRIPTION

In the embodiments of the present disclosure, the term "and/or" describes an association relationship of associated objects, indicating that there may be three types of relationships. For example, A and/or B may represent the following three situations: A alone, both A and B, and B alone. The character "/" generally indicates that the associated objects before and after the character are in an "or" relationship.

In the embodiments of the present disclosure, the term "multiple" refers to two or more. Other quantifiers are similarly defined.

The technical solutions in the embodiments of the present disclosure will be clearly and completely described below in conjunction with the accompanying drawings. Obviously, the described embodiments are only a part of the embodiments of the present disclosure, rather than all of the embodiments. Based on the embodiments of the present disclosure, all other embodiments obtained by those skilled in the art without creative efforts shall fall within the scope of the present disclosure.

For ease of understanding, some related contents involved in the embodiments of the present disclosure are described as follows:

### 1. Digital Twin

A digital twin is a digital concept and technical means that relies on the integration and fusion of data and models as its foundation and core. It constructs an accurate digital mapping of physical objects in digital space in real time, and simulates, verifies, predicts, and controls the entire lifecycle of physical entities based on data integration and predictive analytics, thereby forming a closed loop of intelligent decision-making optimization. The targeted physical objects include physical entities, behaviors, and processes. The data involved in constructing a twin includes real-time sensing data and historical operational data. The integrated models cover physical models, mechanism models, and process models.

The concept of digital twin originated in the aerospace and military industries and has undergone four development stages: "technological exploration, conceptual proposal, application emergence, and industry penetration." Digital twin technology was first used in 1969 by the National Aeronautics and Space Administration (NASA) in the Apollo program to build twins of spacecraft, reflecting their working status in orbit and assisting in handling emergencies. In 2003, the term "digital twin" was formally proposed by Professor Grieves of the University of Michigan, emphasizing the feature of full lifecycle interactive mapping. After several years of conceptual evolution, since 2010, digital twin technology has shown application value across various industries. The U.S. military adopted digital twins to enable digital companion flying for the F-35 fighter jet, thereby reducing maintenance costs and operational risks. General Electric established twin models for aircraft engines to achieve real-time monitoring and predictive maintenance. European industrial giants such as Siemens, Dassault, and ABB promoted digital twin technology in industrial equipment enterprises, further facilitating its adoption in the industrial sector. In recent years, digital twin technology has continued to penetrate industrial and urban management fields and has expanded into vertical industries such as transportation and healthcare, enabling applications such as mechanism-based descriptions, fault diagnostics, risk prediction, and decision support. It is expected to become a general-purpose technology for digital transformation across economic and social industries in the future.

The construction of digital twins builds a digital space for the network, realizing virtual-physical mapping. As digital twin technology evolves and network operations become increasingly complex, and considering the high cost of network failures and expensive testing, there is a need to externally abstract and map traditional physical networks, establish a new development system, and construct brand-new digital twins. Through closed-loop control combining the virtual and physical, the existing rules of network planning, construction, maintenance, and optimization can be transformed, thereby ensuring network operation and maintenance, enabling real-time network optimization, and achieving autonomous future networks.

### 2. Data Plane

In the "three-layer, four-entity, five-plane" architecture of 6G, one of the five planes is the data plane. The data plane is a newly introduced plane in the 6G network architecture, aiming to achieve efficient and secure iteration of massive user data, reliable migration of network status, and the introduction of data services in a trusted manner. This plane will build efficient and unified data management capabilities, supporting refined data collection, efficient data transmission, flexible data storage, and distributed data collaboration. It will take into account data reliability, privacy, and security, thereby realizing closed-loop management over the entire data lifecycle. Meanwhile, it treats data as a service product, establishing service logic based on data providers and consumers, and offering diversified value-added data services. It mainly features capabilities such as data fusion, data continuity, and data service provisioning. Therefore, the data plane collects and stores all data from mobile users and intelligent network elements, and such data may be subscribed to by the AI plane for specific purposes.

The present disclosure provides a method and an apparatus for information interaction. The method and apparatus are based on the same inventive concept. Since the principles for solving the problem are similar, the implementations of the method and the apparatus can be referred to interchangeably, and repetitive parts will not be described again.

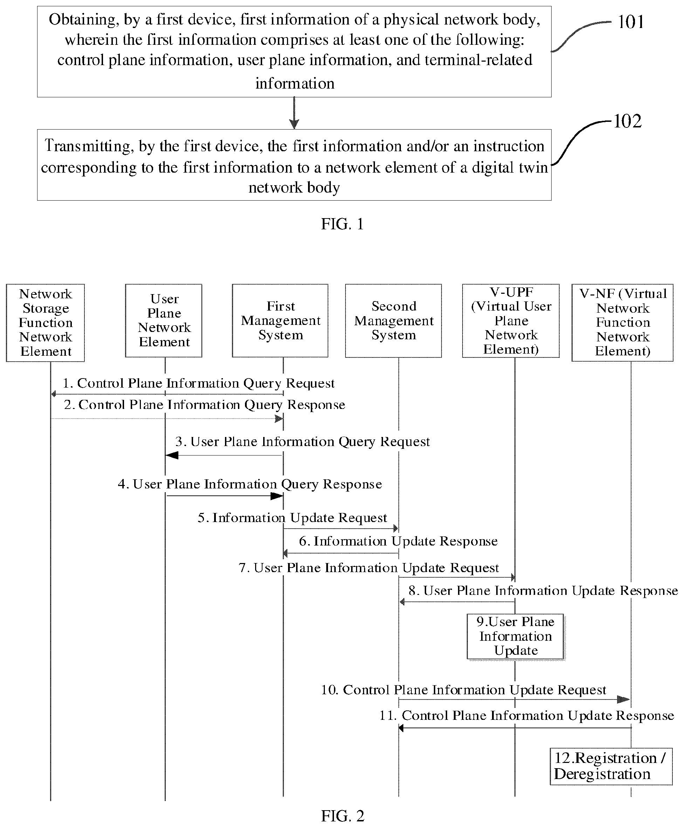

As shown in FIG. 1, a method for information interaction according to an embodiment of the present disclosure includes:
Step 101: A first device obtains first information of a physical network entity, wherein the first information includes at least one of the following: control plane information, user plane information, and terminal-related information;
Step 102: The first device sends the first information and/or an instruction corresponding to the first information to a network element of the digital twin network entity;
wherein the first device includes at least one of the following:
   a first management system configured to manage the physical network entity and a second management system configured to manage the digital twin network entity, wherein a first interface is provided between the first management system and the second management system;
   an information interaction device, wherein a second interface is provided between the information interaction device and the digital twin network entity, and a third interface is provided between the information interaction device and the physical network entity;
   a first network element and a second network element of the digital twin network entity, wherein the first network element is configured to perform network element service discovery for network elements of the physical network entity, and the second network element is configured to subscribe to event exposure services of the network elements of the physical network entity;
   a third network element of the physical network entity and a fourth network element of the digital twin network entity, wherein the third network element is configured to perform service discovery and event exposure service subscription for network elements of the physical network entity, and information interaction is supported between the third network element and the fourth network element.

In this way, the first device, as described above, establishes an information exchange bridge between the physical network entity and the digital twin network entity, thereby realizing information interaction between them.

Optionally, the first device obtains first information of the physical network entity by:
sending a first request to a first target network element and receiving a first response fed back by the first target network element based on the first request, wherein the first response includes the first information; or
receiving a second request sent by the first target network element, wherein the second request includes the first information;
wherein the first target network element is a network element of the physical network entity.

In other words, the first device may send the first request to the first target network element to request the first information, and after receiving the first request, the first target network element feeds back the first response including the first information; or the first target network element proactively sends the second request including the first information, and the first device obtains the first information by receiving the second request.

As one implementation, after receiving the second request, the first device feeds back a second response, which is used to indicate whether the second request has been successfully received.

Of course, in this embodiment, the process in which the first device sends the first information and/or an instruction corresponding to the first information to a network element of the digital twin network entity may also adopt a request-response mechanism.

It should be noted that, in the embodiments of the present disclosure, the instruction corresponding to the first information is determined based on the specific content indicated by the first information. For example, if the first information indicates the status (online or offline) of a session management function network element, then the instruction corresponding to the first information may be a registration instruction or a deregistration instruction. In addition, the instruction corresponding to the first information may also be an operation instruction for updating user plane information, such as link disconnection, or port activation/deactivation.

Optionally, the first response or the second request is used to transmit the first information corresponding to all network elements stored by the first target network element.

Therefore, the first target network element may inform the first device of the first information corresponding to all network elements stored therein in a single transmission via the first response or the second request, thereby improving transmission efficiency and reducing signaling overhead. In this case, the first target network element may be a network storage function network element or a session management function network element, which stores the first information corresponding to multiple network elements and notifies the first device of all such information.

As one implementation, the first request is used to request the first target network element to feed back the first information corresponding to all network elements stored therein.

Of course, if the first target network element (e.g., a user plane function network element) is only capable of storing the first information corresponding to itself, the user plane function network element can only send its own corresponding first information, which does not include the first information of other network elements.

Optionally, when the first target network element is a session management function network element and the first information includes user plane information, the session management function network element is configured to obtain user plane topology information.

That is, the session management function network element can obtain user plane topology information. When the session management function network element sends user plane information via the first response or the second request, the user plane information includes the user plane topology information. In this way, the network elements of the digital twin network entity can also obtain the user plane topology information, thereby supporting the establishment, updating, and maintenance of user plane function network elements in the digital twin network entity.

In this embodiment, when the first device includes the first management system and the second management system, information interaction between the physical network entity and the digital twin network entity is achieved via their respective management systems. The first management system, which manages the physical network entity, sends the first request to the first target network element to obtain the first information through the feedback of the first response; or directly receives the second request sent by the first target network element, thereby obtaining the first information proactively reported by the first target network element. Then, the first management system sends the first information to the second management system through the first interface provided between them.

Optionally, when the first device includes the first management system and the second management system, the operation of the first device sending the first information to a network element of the digital twin network entity includes:
the second management system, after receiving the first information sent by the first management system through the first interface, sends the first information and/or an instruction corresponding to the first information to a network element of the digital twin network entity.

In this way, the second management system can send the first information and/or the instruction corresponding to the first information to the network element of the digital twin network entity based on the received first information, thereby enabling real-time adjustment and updating of the digital twin network entity.

As one implementation, the first interface may adopt Internet Protocol (IP) or other protocols.

As one implementation, after obtaining the first information, the first management system sends the first information to the second management system in the data format defined by the first interface.

For example, the first management system obtains the first information from the first target network element (e.g., a network storage function network element or a user plane network element); then, the first management system sends the first information to the second management system; subsequently, the second management system sends the first information and/or an instruction corresponding to the first information to a second target network element (e.g., a V-network function network element or a V-user plane network element), as shown in steps 1-12 in FIG. 2:
Step 1: The first management system sends a first request, such as a control plane information query request, to the network storage function network element. Specifically, the control plane information that can be queried by the control plane information query request includes network element status, network element identifier, etc.
Step 2: The network storage function network element sends a first response, such as a control plane information query response, to the first management system. Specifically, the first response mainly carries information such as the status and identifier of the network element.
Step 3: The first management system sends a first request, such as a user plane information query request, to a user plane network element under its management. Specifically, the user plane information that can be queried includes forwarding device identifier, link information, port number, port status, etc. The user plane information query request may carry such information to indicate the query target.
Step 4: The user plane network element sends a first response, such as a user plane information query response, to the first management system. Specifically, the first response mainly carries forwarding device identifier, link information, port number, port status, etc.
Step 5: The first management system updates the collected control plane information and user plane information to the second management system via an information update request.
Step 6: After receiving the information update request sent by the first management system, the second management system sends an information update response to the first management system.
Step 7: The second management system updates the queried user plane information to the V-user plane network element via a user plane information update request, carrying information such as the forwarding device identifier, link information, port number, and port status; and issues operation instructions based on the latest user plane information (e.g., link disconnection, port activation/deactivation).
Step 8: The V-user plane network element in the digital twin network entity makes an update response upon receiving the user plane information update request.
Step 9: The V-user plane network element in the digital twin network entity performs adjustment and updating according to the latest user plane information and operation instructions, such as updating user plane information.
Step 10: The second management system sends instructions to the corresponding V-network function network element via a control plane information update request based on the queried control plane network element information. For example, if the session management function network element is found to be offline, the second management system sends a deregistration instruction to the session management function network element in the physical network.
Step 11: The V-network function network element in the digital twin network entity sends an update response to the second management system after receiving the control plane information update request sent by the second management system.
Step 12: The V-network function network element in the digital twin network entity updates status or other related information based on the received instruction, such as registration or deregistration.

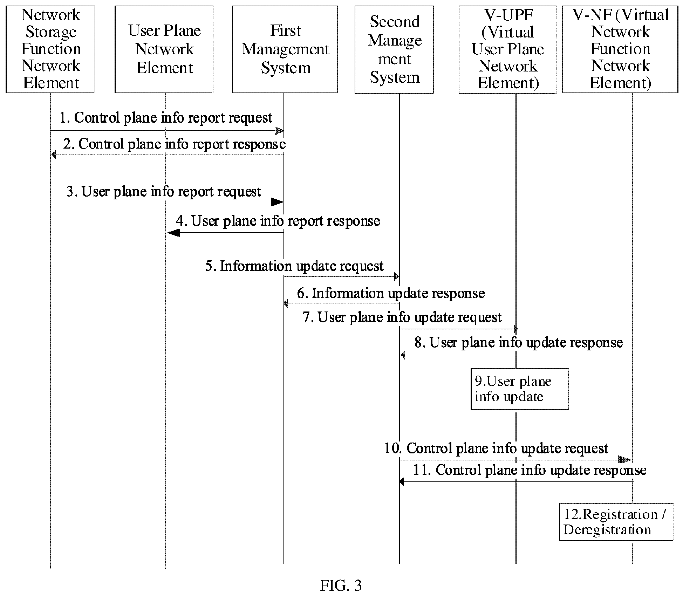

Alternatively, as shown in FIG. 3, Steps 1-12 are performed, where Steps 1-4 differ from those in FIG. 2 in that the first management system no longer initiates the queries, but instead, the network storage function network element and the user plane network element proactively report to the first management system. The information content remains the same, and the remaining Steps 5-12 are the same as those in FIG. 2. Thus, details are omitted.

It should be noted that in FIG. 2 and FIG. 3, Steps 1-2 and Steps 3-4 are not ordered and may be executed in any order or simultaneously. Similarly, Steps 7-8 and Steps 10-11 are not ordered either, and details are omitted.

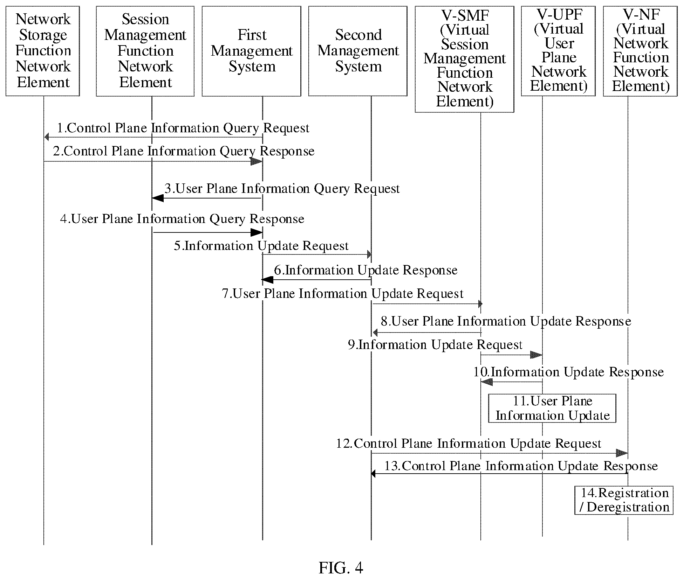

For example, the first management system obtains first information from a first target network element (e.g., a network storage function network element or a session management function network element); then, the first management system sends the first information to the second management system; subsequently, the second management system sends the first information and/or an instruction corresponding to the first information to a second target network element (e.g., a V-session management function network element or a V-network function network element), as shown in Steps 1-14 in FIG. 4:
Step 1: The first management system sends a first request, such as a control plane information query request, to the network storage function network element. Specifically, the control plane information that can be queried includes network element status and network element identifier.
Step 2: The network storage function network element sends a first response, such as a control plane information query response, to the first management system. Specifically, the first response mainly carries information such as the status and identifier of the network element.
Step 3: The first management system sends a first request, such as a user plane information query request, to a session management function network element under its management. The user plane information that can be queried includes forwarding device identifier, link information, port number, and port status. The query request may also carry such information to indicate the query target.
Step 4: The session management function network element sends a first response, such as a user plane information query response, to the first management system. The first response mainly carries information such as forwarding device identifier, link information, port number, and port status.
Step 5: The first management system updates the collected control plane information and user plane information to the second management system via an information update request.
Step 6: After receiving the information update request sent by the first management system, the second management system sends an information update response to the first management system.
Step 7: The second management system updates the queried user plane information to the V-session management function network element via a user plane information update request, carrying information such as forwarding device identifier, link information, port number, and port status.
Step 8: The V-session management function network element in the digital twin network entity makes an update response upon receiving the user plane information update request.
Step 9: The V-session management function network element sends an information update request to the V-user plane network element, carrying information such as forwarding device identifier, link information, port number, and port status; and issues operation instructions based on the latest user plane information (e.g., link disconnection, port activation/deactivation).
Step 10: After receiving the information update request, the V-user plane network element sends an information update response to the V-session management function network element.
Step 11: The V-user plane network element performs adjustments and updates based on the latest user plane information and operation instructions, such as updating user plane information.
Step 12: The second management system, based on the queried control plane network element information, issues instructions to the corresponding V-network function network element through a control plane information update request. For example, if the session management function network element is found to be offline, the second management system sends a deregistration instruction to the session management function network element in the physical network.
Step 13: After receiving the control plane information update request from the second management system, the V-network function network element in the digital twin network entity sends an update response to the second management system.
Step 14: The V-network function network element in the digital twin network entity updates status or other related information based on the received instruction, such as performing registration or deregistration.

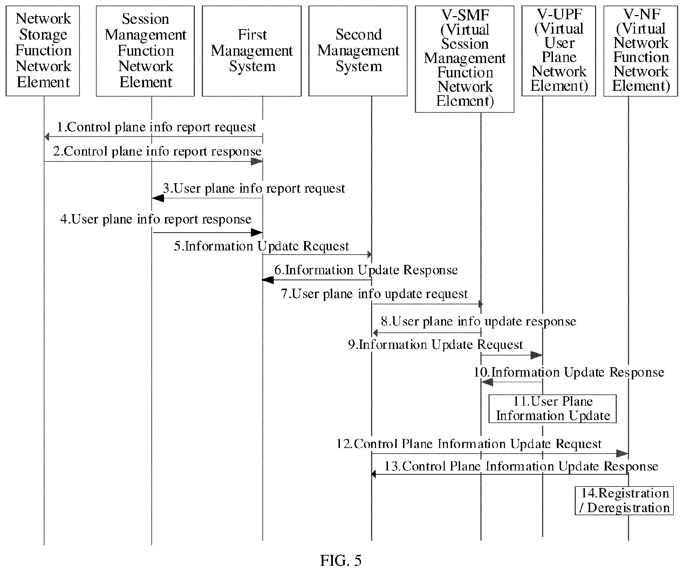

Alternatively, as shown in FIG. 5, Steps 1-14 are performed, where Steps 1-4 differ from those in FIG. 4 in that the first management system no longer initiates the queries, but instead, the network storage function network element and the session management function network element proactively report to the first management system. The information content remains the same. The remaining Steps 5-14 are the same as those in FIG. 4, and details are omitted.

It should be noted that in FIG. 4 and FIG. 5, Steps 1-2 and Steps 3-4 are not ordered and may be executed in any sequence or simultaneously. Similarly, Steps 7-8 and Steps 12-13 are not ordered either, and details are omitted.

In this embodiment, the user plane function network element is also referred to as the user plane network element.

In this embodiment, when the first device includes the information interaction device, the information interaction device interacts with network elements of the physical network entity via the third interface and with network elements of the digital twin network entity via the second interface. Therefore, optionally, the information interaction device is used to manage the physical network entity and the digital twin network entity, or is used to store data information; when the first device includes the information interaction device,
the first device obtains first information of the physical network entity, including:
the information interaction device performs at least one of the following operations through the third interface:
sending the first request and receiving the first response;
receiving the second request.

Here, if the information interaction device is used to manage the physical network entity and the digital twin network entity, it may be a third management system; if it is used to store data information, it may be a data storage device.

Optionally, the operation of the first device sending the first information and/or an instruction corresponding to the first information to a network element of the digital twin network entity includes:
the information interaction device sends the first information and/or the instruction corresponding to the first information to the network element of the digital twin network entity through the second interface in a data format required by the second interface.

As one implementation, the second interface and the third interface may adopt IP or other protocols.

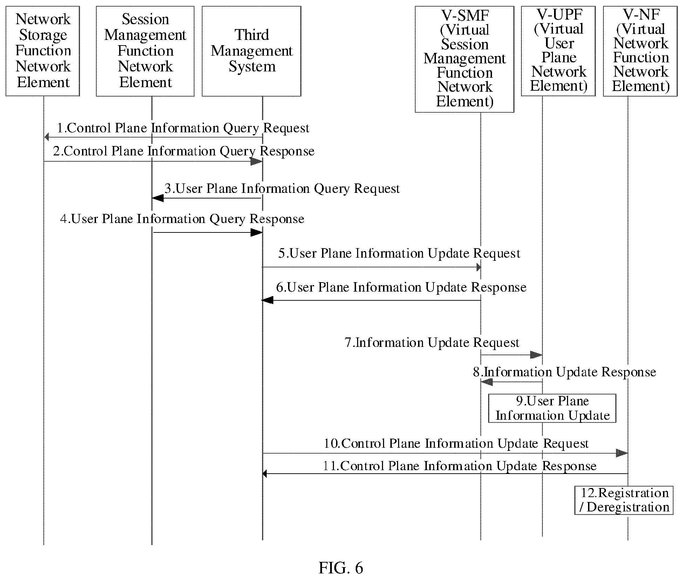

For example, the third management system obtains the first information from a first target network element (e.g., a network storage function network element or a session management function network element); then, the third management system sends the first information and/or an instruction corresponding to the first information to a second target network element (e.g., a V-network function network element or a V-session management function network element), as shown in Steps 1-12 of FIG. 6:
Step 1: The third management system sends a first request, such as a control plane information query request, to the network storage function network element. Specifically, the control plane information that can be queried includes network element status and network element identifier.
Step 2: The network storage function network element sends a first response, such as a control plane information query response, to the third management system. Specifically, the first response mainly carries information such as the status and identifier of the network element.
Step 3: The third management system sends a first request, such as a user plane information query request, to the session management function network element. The user plane information that can be queried includes forwarding device identifier, link information, port number, and port status. The user plane information query request may also carry such information to indicate the query target.
Step 4: The session management function network element sends a first response, such as a user plane information query response, to the third management system. Specifically, the first response mainly carries information such as forwarding device identifier, link information, port number, and port status.
Step 5: The third management system updates the queried user plane information to the V-session management function network element via a user plane information update request, carrying information such as forwarding device identifier, link information, port number, and port status.
Step 6: After receiving the user plane information update request, the V-session management function network element in the digital twin network entity makes an update response.
Step 7: The V-session management function network element sends an information update request to the V-user plane network element, carrying information such as forwarding device identifier, link information, port number, and port status; and issues operation instructions based on the latest user plane information (e.g., link disconnection, port activation/deactivation).
Step 8: After receiving the information update request, the V-user plane network element sends an information update response to the V-session management function network element.
Step 9: The V-user plane network element performs adjustment and updating based on the latest user plane information and operation instructions, such as updating user plane information.
Step 10: The third management system, based on the queried control plane network element information, issues instructions to the corresponding V-network function network element through a control plane information update request. For example, if the session management function network element is found to be offline, the third management system sends a deregistration instruction to the session management function network element in the physical network.
Step 11: After receiving the control plane information update request from the third management system, the V-network function network element in the digital twin network entity sends an update response to the third management system.
Step 12: The V-network function network element in the digital twin network entity updates status or other related information based on the received instruction, such as performing registration or deregistration.

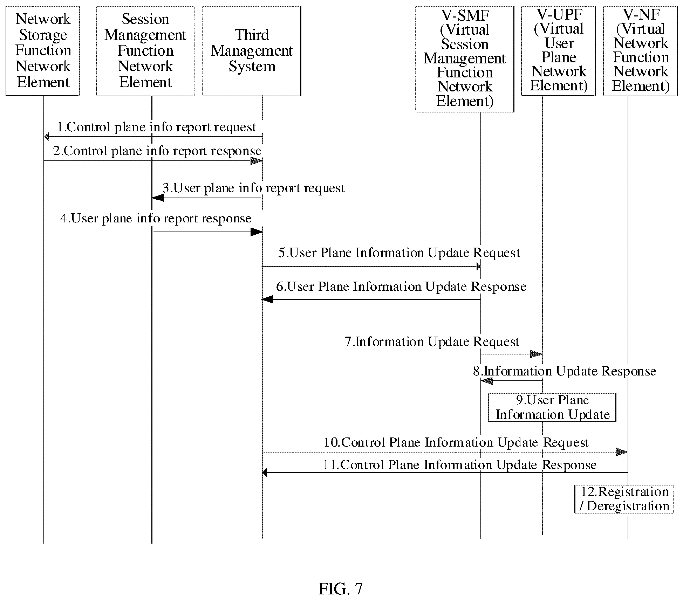

Alternatively, as shown in FIG. 7, Steps 1-12 are performed, where Steps 1-4 differ from those in FIG. 6 in that the third management system no longer initiates the queries, but instead, the network storage function network element and the session management function network element proactively report to the third management system. The information content remains the same. The remaining Steps 5-12 are the same as those in FIG. 6, and details are omitted.

It should be noted that in FIG. 6 and FIG. 7, Steps 1-2 and Steps 3-4 are not ordered and may be executed in any sequence or simultaneously. Similarly, Steps 5-6 and Steps 10-11 are not ordered either, and details are omitted.

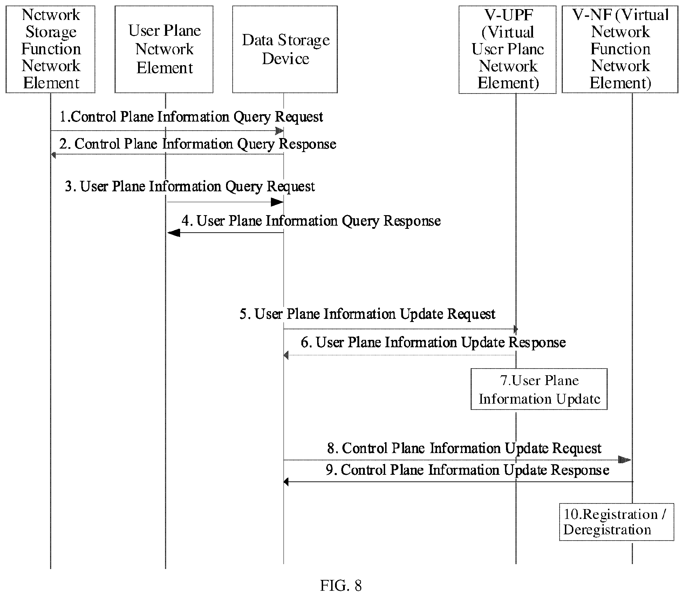

For example, the data storage device obtains first information from a first target network element (e.g., a network storage function network element or a user plane network element); then, the data storage device sends the first information and/or an instruction corresponding to the first information to a second target network element (e.g., a V-network function network element or a V-user plane network element), as shown in Steps 1-10 of FIG. 8:
Step 1: The data storage device sends a first request, such as a control plane information query request, to the network storage function network element. Specifically, the control plane information that can be queried includes network element status and network element identifier.
Step 2: The network storage function network element sends a first response, such as a control plane information query response, to the data storage device. Specifically, the first response mainly carries information such as the status and identifier of the network element.
Step 3: The data storage device sends a first request, such as a user plane information query request, to the user plane network element. The user plane information that can be queried includes forwarding device identifier, link information, port number, and port status. The query request may also carry such information to indicate the query target.
Step 4: The user plane network element sends a first response, such as a user plane information query response, to the data storage device. Specifically, the first response mainly carries information such as forwarding device identifier, link information, port number, and port status.
Step 5: The data storage device updates the queried user plane information to the V-user plane network element via a user plane information update request, carrying information such as forwarding device identifier, link information, port number, and port status; and issues operation instructions based on the latest user plane information (e.g., link disconnection, port activation/deactivation).
Step 6: The V-user plane network element in the digital twin network entity makes an update response upon receiving the user plane information update request.
Step 7: The V-user plane network element performs adjustment and updating based on the latest user plane information and operation instructions, such as updating user plane information.
Step 8: The data storage device, based on the queried control plane network element information, issues instructions to the corresponding V-network function network element through a control plane information update request. For example, if the session management function network element is found to be offline, the data storage device sends a deregistration instruction to the session management function network element in the physical network.
Step 9: After receiving the control plane information update request from the data storage device, the V-network function network element in the digital twin network entity sends an update response to the data storage device.
Step 10: The V-network function network element in the digital twin network entity updates status or other related information based on the received instruction, such as performing registration or deregistration.

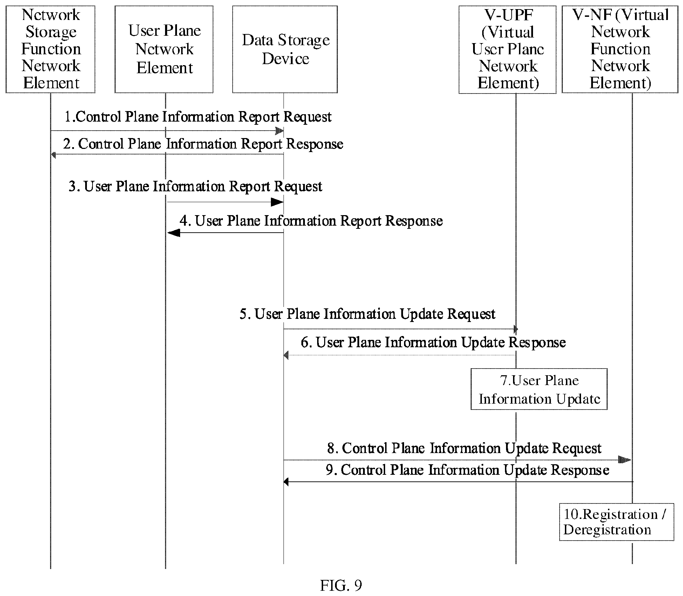

Alternatively, as shown in FIG. 9, Steps 1-10 are performed, where Steps 1-4 differ from those in FIG. 8 in that the data storage device no longer initiates the queries, but instead, the network storage function network element and the user plane network element proactively report to the data storage device. The information content remains the same. The remaining Steps 5-10 are the same as those in FIG. 8, and details are omitted.

It should be noted that in FIG. 8 and FIG. 9, Steps 1-2 and Steps 3-4 are not ordered and may be executed in any sequence or simultaneously. Similarly, Steps 5-6 and Steps 8-9 are not ordered either, and details are omitted.

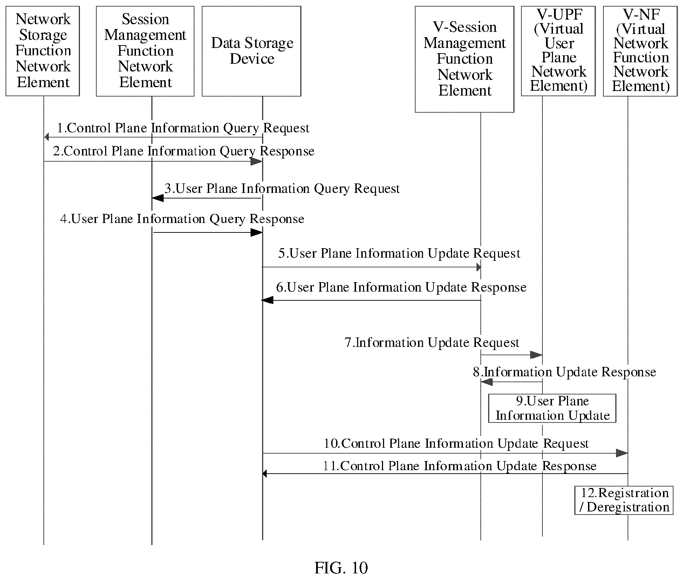

For example, the digital storage device obtains first information from a first target network element (e.g., a network storage function network element or a session management function network element); then, the digital storage device sends the first information and/or an instruction corresponding to the first information to a second target network element (e.g., a V-session management function network element or a V-network function network element), as shown in Steps 1-12 of FIG. 10:
Step 1: The digital storage device sends a first request, such as a control plane information query request, to the network storage function network element. Specifically, the control plane information that can be queried includes network element status and network element identifier.
Step 2: The network storage function network element sends a first response, such as a control plane information query response, to the digital storage device. Specifically, the first response mainly carries information such as the status and identifier of the network element.
Step 3: The digital storage device sends a first request, such as a user plane information query request, to the session management function network element. The user plane information that can be queried includes forwarding device identifier, link information, port number, and port status. The query request may also carry such information to indicate the query target.
Step 4: The session management function network element sends a first response, such as a user plane information query response, to the digital storage device. Specifically, the first response mainly carries information such as forwarding device identifier, link information, port number, and port status.
Step 5: The digital storage device updates the queried user plane information to the V-session management function network element via a user plane information update request, carrying information such as forwarding device identifier, link information, port number, and port status.
Step 6: The V-session management function network element in the digital twin network entity makes an update response upon receiving the user plane information update request.
Step 7: The V-session management function network element sends an information update request to the V-user plane network element, carrying information such as forwarding device identifier, link information, port number, and port status; and issues operation instructions based on the latest user plane information (e.g., link disconnection, port activation/deactivation).
Step 8: After receiving the information update request, the V-user plane network element sends an information update response to the V-session management function network element.
Step 9: The V-user plane network element performs adjustment and updating based on the latest user plane information and operation instructions, such as updating user plane information.
Step 10: The digital storage device, based on the queried control plane network element information, issues instructions to the corresponding V-network function network element through a control plane information update request. For example, if the session management function network element is found to be offline, the digital storage device sends a deregistration instruction to the session management function network element in the physical network.
Step 11: After receiving the control plane information update request from the digital storage device, the V-network function network element in the digital twin network entity sends an update response to the digital storage device.
Step 12: The V-network function network element in the digital twin network entity updates status or other related information based on the received instruction, such as performing registration or deregistration.

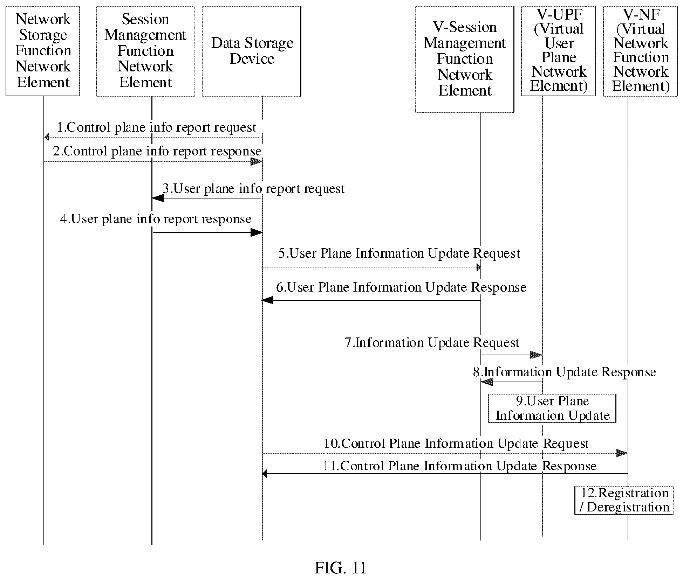

Alternatively, as shown in FIG. 11, Steps 1-12 are performed, where Steps 1-4 differ from those in FIG. 10 in that the digital storage device no longer initiates the queries, but instead, the network storage function network element and the session management function network element proactively report to the digital storage device. The information content remains the same. The remaining Steps 5-12 are the same as those in FIG. 10, and details are omitted.

It should be noted that in FIG. 10 and FIG. 11, Steps 1-2 and Steps 3-4 are not ordered and may be executed in any sequence or simultaneously. Similarly, Steps 5-6 and Steps 10-11 are not ordered either, and details are omitted.

Optionally, the first request is a query request.

That is, when the first device includes the first management system and the second management system, or when the first device includes the information interaction device, the first request sent by the first device is a query request.

In this embodiment, when the first device includes the first network element and the second network element, information interaction between the physical network entity and the digital twin network entity is implemented via network elements of the digital twin network entity. The first network element and the second network element are functionally enhanced so that they are capable of obtaining the first information. Therefore, optionally, when the first device includes the first network element and the second network element, the first request includes a network element service discovery request and/or an event exposure service subscription request.

The first device sends the first request to a first target network element and receives a first response fed back by the first target network element based on the first request, including at least one of the following:
the first network element sends a network element service discovery request to a fifth network element and receives a network element service discovery response fed back by the fifth network element, wherein the response carries the control plane information;
the second network element sends an event exposure service subscription request to a sixth network element and receives an event exposure service subscription response fed back by the sixth network element, wherein the response carries the user plane information;
wherein the fifth network element and the sixth network element belong to the first target network element, and the sixth network element allows event exposure service subscription.

As one implementation, the first network element may be a network storage function network element, and the second network element may be a session management function network element. In this case, the session management function network element in the digital twin network entity, in addition to obtaining user plane information by subscribing to event exposure services from the sixth network element, may also directly query user plane information from a network element of the physical network entity, such as a user plane network element.

Moreover, since both the first network element and the second network element are network elements of the digital twin network entity, the process of obtaining the first information and sending the first information or an instruction corresponding to the first information to other network elements of the digital twin network entity may adopt a request-response mechanism, and the details are omitted herein.

Optionally, when the first network element is a network storage function network element, the network storage function network element is capable of proactively sending information and/or instructions to a second target network element of the digital twin network entity.

Taking the fifth network element as the network storage function network element of the physical network entity, when the network storage function network element of the digital twin network entity (as the first network element) obtains control plane information (e.g., online/offline status of network function elements) from the network storage function network element of the physical network entity via a service-oriented operation, it is capable of sending the control plane information and/or an instruction corresponding thereto to a second target network element, i.e., a network function network element of the digital twin network entity, thereby enabling the registration or deregistration of the network function element, and completing control plane information interaction and update. In this case, the capability of proactively sending registration/deregistration instructions (or requests) from the network storage function network element of the digital twin network entity to the network function network element is added. Of course, to suit different scenarios, the enhanced capability of the network storage function network element is not limited to proactively sending registration/deregistration instructions, but also includes the ability to proactively send other information and/or instructions. In this way, through functional enhancement, the network storage function network element is no longer limited to passively obtaining information and/or instructions, but can also proactively send information and/or instructions to the second target network element of the digital twin network entity, thereby establishing an information exchange bridge between the physical network entity and the digital twin network entity.

It should be understood that, if the network storage function network element of the digital twin network entity sends a registration request to a non-registered network element, there may be a case where the network storage function network element cannot locate the unregistered network element, meaning the instruction cannot be delivered. In such a case, the network storage function network element may send the related instruction to another network element or entity (e.g., Management and Network Orchestration (MANO)), thereby achieving the registration of the corresponding network element.

As the second network element, the session management function network element of the digital twin network entity may refer to the event exposure service of the access and mobility management function (AMF) network element, and be enhanced with the capability of subscribing to event exposure services of network elements of the physical network entity. The session management function network element of the digital twin network entity may subscribe to the event exposure service of the session management function network element in the physical network entity, thereby completing user plane information interaction; alternatively, it may directly query user plane information from a user plane network element.

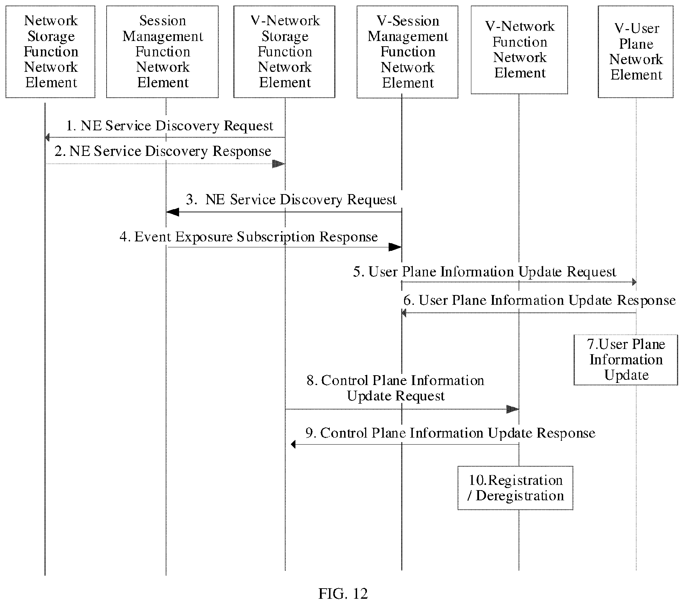

For example, the first network element (e.g., a V-network storage function network element) obtains control plane information from a fifth network element (e.g., a network storage function network element); and the second network element (e.g., a V-session management function network element) obtains user plane information from a sixth network element (e.g., a session management function network element), as shown in Steps 1-10 of FIG. 12:
Step 1: The V-network storage function network element sends a first request, such as a network element service discovery request, to the fifth network element (e.g., a network storage function network element of the physical network entity). Specifically, the network element service discovery request may discover control plane information in the network storage function network element (i.e., information of control plane network elements), such as network element status and network element identifier.
Step 2: The network storage function network element sends a first response, such as a network element service discovery response, to the V-network storage function network element. Specifically, the first response mainly carries information such as the status and identifier of the network element.
Step 3: The V-session management function network element sends a first request, such as an event exposure service subscription request (referred to as event exposure subscription request), to a sixth network element (e.g., a session management function network element of the physical network entity). Specifically, the event exposure subscription request is used to subscribe to user plane information of the session management function network element in the physical network entity, such as forwarding device identifier, link information, port number, and port status.
Step 4: When the session management function network element in the physical network entity collects and updates user plane information, it sends a first response, such as an event exposure service subscription response (referred to as event exposure subscription response), to the V-session management function network element. Specifically, the first response mainly carries information such as forwarding device identifier, link information, port number, and port status.
Step 5: The V-session management function network element updates the latest user plane information to the V-user plane network element via a user plane information update request and issues operation instructions based on the latest user plane information (e.g., link disconnection, port activation/deactivation).
Step 6: The V-user plane network element sends a user plane information update response to the V-session management function network element upon receiving the user plane information update request.
Step 7: The V-user plane network element performs adjustment and updating based on the latest user plane information and operation instructions, such as updating user plane information.
Step 8: The V-network storage function network element issues an instruction to the corresponding V-network function network element through a control plane information update request based on the discovered control plane network element information. For example, if the session management function network element is found to be offline, the V-network storage function network element sends a deregistration instruction to the session management function network element in the physical network.
Step 9: The V-network function network element in the digital twin network entity sends an update response to the V-network storage function network element after receiving the control plane information update request.
Step 10: The V-network function network element in the digital twin network entity updates status or other information based on the received instruction, such as performing registration or deregistration.

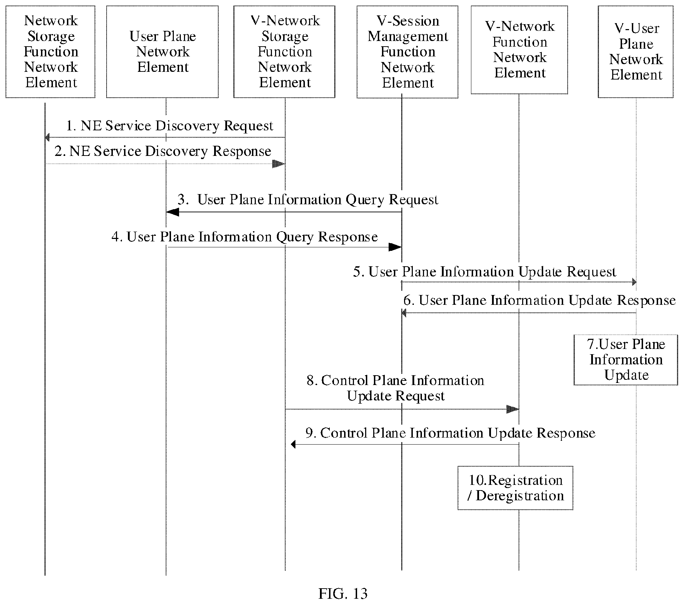

Alternatively, as shown in FIG. 13, Steps 1-10 are performed, where compared to FIG. 12, the session management function network element of the physical network entity is replaced with a user plane network element. Steps 3-4 are replaced with a user plane information query request and response, in which the V-session management function network element directly queries the user plane information from the user plane network element. The queried user plane information remains unchanged, and the other steps are the same.

It should be noted that in FIG. 12 and FIG. 13, Steps 1-2 and Steps 3-4 are not ordered and may be executed in any sequence or simultaneously. Similarly, Steps 5-6 and Steps 8-9 are not ordered either, and details are omitted.

In this embodiment, when the first device includes the third network element and the fourth network element, information interaction between the physical network entity and the digital twin network entity is implemented via their respective network elements. Therefore, optionally, when the first device includes the third network element and the fourth network element, the first request includes a network element service discovery request and/or an event exposure service subscription request;
the first device sends the first request to a first target network element and receives a first response fed back by the first target network element based on the first request, including at least one of the following:
the third network element sends a network element service discovery request to a seventh network element and receives a network element service discovery response fed back by the seventh network element, wherein the response carries the control plane information;
the third network element sends an event exposure service subscription request to an eighth network element and receives an event exposure service subscription response fed back by the eighth network element, wherein the response carries the user plane information;
wherein the seventh network element and the eighth network element belong to the first target network element, and the eighth network element allows event exposure service subscription.

Optionally, the operation of the first device sending the first information and/or an instruction corresponding to the first information to a network element of the digital twin network entity includes:
the fourth network element sends the first information and/or the instruction corresponding to the first information to a second target network element upon receiving the first information from the third network element;
wherein the second target network element is a network element of the digital twin network entity.

Here, the process in which the fourth network element sends the first information and/or an instruction corresponding to the first information to the second target network element may adopt a request-response mechanism, and the details are omitted.

Here, the third network element may be a conventional network element of the physical network entity. Its capabilities are enhanced to allow it to perform service discovery and subscribe to event exposure services of network elements of the physical network entity, and to interact with the fourth network element.

Alternatively, the third network element may be a newly added network element of the physical network entity, with capabilities to invoke service discovery from other network elements of the physical network entity, subscribe to event exposure services, and interact with the fourth network element.

Similarly, the fourth network element may be a conventional network element or a newly added network element of the digital twin network entity.

As one implementation, the third and fourth network elements may be newly added data storage function network elements on top of the original control plane network elements of their respective network entities, used for storing data information related to terminals, radio access, core networks, etc.

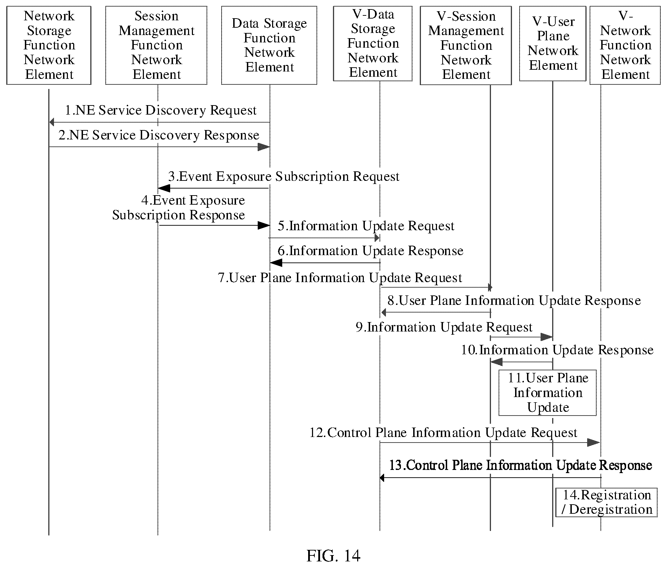

For example, the data storage function network element of the physical network entity, acting as the third network element, invokes the service discovery function of the seventh network element (e.g., a network storage function network element) to discover network element information within the network storage function. At the same time, the data storage function network element invokes the event exposure function of the session management function network element to obtain user plane information, as shown in Steps 1-14 of FIG. 14:
Step 1: The data storage function network element of the physical network entity sends a first request, such as a network element service discovery request, to the seventh network element (e.g., a network storage function network element). Specifically, the network element service discovery request is used to discover control plane information of the network storage function network element (i.e., information of control plane network elements), such as network element status and network element identifier.
Step 2: The network storage function network element sends a first response, such as a network element service discovery response, to the data storage function network element. Specifically, the first response mainly carries information such as the status and identifier of the network element.
Step 3: The data storage function network element sends a first request, such as an event exposure service subscription request (referred to as event exposure subscription request), to the eighth network element (e.g., a session management function network element). Specifically, the event exposure subscription request is used to subscribe to user plane information in the session management function network element of the physical network entity, including forwarding device identifier, link information, port number, and port status. The request may also carry such information to specify the query target.
Step 4: The session management function network element sends a first response, such as an event exposure service subscription response (referred to as event exposure subscription response), to the data storage function network element. Specifically, the first response mainly carries information such as forwarding device identifier, link information, port number, and port status.
Step 5: The data storage function network element sends the collected control plane and user plane information to the V-data storage function network element via an information update request.
Step 6: The V-data storage function network element sends an information update response to the data storage function network element upon receiving the information update request.
Step 7: The V-data storage function network element updates the queried user plane information to the V-session management function network element via a user plane information update request, carrying information such as forwarding device identifier, link information, port number, and port status.
Step 8: The V-session management function network element in the digital twin network entity sends an update response upon receiving the user plane information update request.
Step 9: The V-session management function network element sends an information update request to the V-user plane network element to update the latest user plane information to the V-user plane network element in the digital twin network entity; and issues operation instructions based on the latest user plane information (e.g., link disconnection, port activation/deactivation).
Step 10: The V-user plane network element sends an information update response to the V-session management function network element after receiving the information update request.
Step 11: The V-user plane network element performs adjustment and updating based on the latest user plane information and operation instructions, such as updating user plane information.
Step 12: The V-data storage function network element issues instructions to the corresponding V-network function network element through a control plane information update request based on the queried control plane network element information. For example, if the session management function network element is found to be offline, the V-data storage function network element sends a deregistration instruction to the session management function network element in the physical network.
Step 13: The V-network function network element in the digital twin network entity sends an update response to the V-data storage function network element after receiving the control plane information update request.
Step 14: The V-network function network element in the digital twin network entity updates status or other information based on the received instruction, such as performing registration or deregistration.

It should be noted that in FIG. 14, Steps 1-2 and Steps 3-4 are not ordered and may be executed in any sequence or simultaneously. Similarly, Steps 7-8 and Steps 12-13 are not ordered either, and details are omitted.

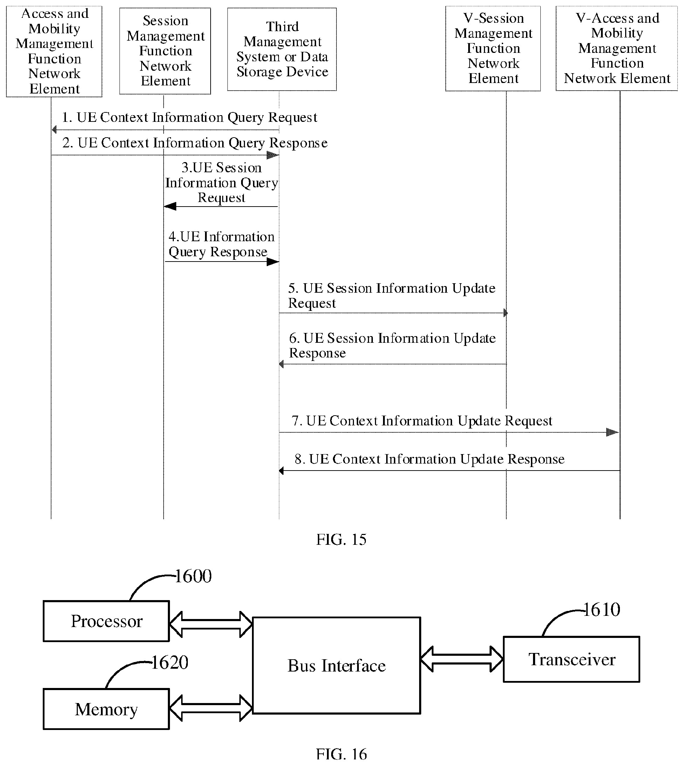

Additionally, the above examples primarily describe the interaction of control plane and user plane information between the physical network entity and the digital twin network entity; however, interaction of terminal-related information between the physical network entity and the digital twin network entity can also be performed. Taking the first device as the third management system or data storage device as an example, the third management system or data storage device may also obtain terminal-related information by querying terminal context information from the access and mobility management function network element, and session-related information from the session management function network element. This information is then updated to the V-access and mobility management function network element and the V-session management function network element of the digital twin network entity, which subsequently perform registration/deregistration of terminals and session establishment/release within the digital twin network entity through their respective modules, as shown in Steps 1-8 of FIG. 15:
Step 1: The third management system or data storage device sends a terminal (UE) context information query request to the access and mobility management function network element to query terminal context information, including terminal status, terminal identifier, terminal count, etc.
Step 2: After receiving the terminal context information, the access and mobility management function network element sends a UE context information query response to the third management system or data storage device.
Step 3: The third management system or data storage device sends a UE session information query request to the session management function network element, carrying information such as terminal session count, session ID, user plane path, etc.
Step 4: After receiving the terminal session information, the session management function network element sends a UE session information query response to the third management system or data storage device.
Step 5: The third management system or data storage device updates the queried terminal session information to the V-session management function network element via a UE session information update request, carrying information such as terminal session count, session ID, and user plane path.
Step 6: The V-session management function network element in the digital twin network entity sends an update response upon receiving the UE session information update request.
Step 7: The third management system or data storage device updates the queried terminal context information to the V-access and mobility management function network element via a UE context information update request, carrying information such as terminal status, terminal identifier, terminal count, etc.
Step 8: The V-access and mobility management function network element in the digital twin network entity sends an update response upon receiving the UE context information update request.

It should be noted that in FIG. 15, Steps 1-2 and Steps 3-4 are not ordered and may be executed in any sequence or simultaneously. Similarly, Steps 5-6 and Steps 7-8 are not ordered either, and details are omitted.

In addition, in FIGs. 2 to 15, the step of returning a response by the receiving end of a request and the subsequent execution step may not be sequential. Taking FIG. 2 as an example, Step 8 and Step 9 may be executed in the order of Step 8 followed by Step 9, or Step 9 followed by Step 8, or both simultaneously.

Additionally, optionally, the first information is the information triggered when a change occurs in the physical network entity.

That is, when a change occurs in the physical network entity, the first information is exchanged between the physical network entity and the digital twin network entity to avoid unnecessary consumption of transmission resources.

Optionally, the control plane information includes at least one of the following:
Network element status;
Network element identifier.

Optionally, the user plane information includes at least one of the following:
Forwarding device identifier;
Link information;
Port number;
Port status.

Optionally, the terminal-related information includes at least one of the following:
Terminal status;
Terminal identifier;
Terminal count;
Terminal session count;
Session ID;
User plane path.

In summary, the method provided in the embodiments of the present disclosure establishes a bridge between the physical network entity and the digital twin network entity through the above-mentioned first device, thereby realizing maximized real-time replication of the physical network entity into the digital twin network entity.

As shown in FIG. 16, an embodiment of the present disclosure further provides an information interaction apparatus, which is applied to a first device and includes: a memory 1620, a transceiver 1610, and a processor 1600. The memory 1620 is configured to store program instructions; the transceiver 1610 is configured to transmit and receive data under the control of the processor 1600; and the processor 1600 is configured to read the program instructions stored in the memory 1620. The transceiver 1610 is used to perform the following operations:

Obtain first information of a physical network entity, the first information including at least one of: control plane information, user plane information, and terminal-related information;

Send the first information and/or an instruction corresponding to the first information to a network element of a digital twin network entity;
Wherein the first device includes at least one of the following:
a first management system configured to manage the physical network entity and a second management system configured to manage the digital twin network entity, wherein a first interface is provided between the first management system and the second management system;
an information interaction device, wherein a second interface is provided between the information interaction device and the digital twin network entity, and a third interface is provided between the information interaction device and the physical network entity;
a first network element and a second network element of the digital twin network entity, wherein the first network element is configured to perform network element service discovery for network elements of the physical network entity, and the second network element is configured to subscribe to event exposure services of network elements of the physical network entity;
a third network element of the physical network entity and a fourth network element of the digital twin network entity, wherein the third network element is configured to invoke service discovery and subscribe to event exposure services for network elements of the physical network entity, and the third network element and the fourth network element support information interaction.

Optionally, the transceiver 1610 is further configured to:
send a first request to a first target network element and receive a first response fed back by the first target network element based on the first request, wherein the first response includes the first information; or
receive a second request sent by the first target network element, wherein the second request includes the first information;
Wherein the first target network element is a network element of the physical network entity.

Optionally, the first response or the second request is used to transmit the first information corresponding to all network elements stored by the first target network element.

Optionally, when the first target network element is a session management function network element and the first information includes user plane information, the session management function network element is capable of obtaining user plane topology information.

Optionally, when the first device includes the first management system and the second management system, the transceiver 1610 is further configured to:
send the first information and/or an instruction corresponding to the first information to a network element of the digital twin network entity after the second management system receives the first information sent by the first management system via the first interface.

Optionally, when the first device includes the information interaction device that is configured to manage the physical network entity and the digital twin network entity, or configured to store data information, the transceiver 1610 is further configured to:
perform at least one of the following operations via the third interface of the information interaction device:
send the first request and receive the first response;
receive the second request.

Optionally, the transceiver 1610 is further configured to:
send the first information and/or an instruction corresponding to the first information to a network element of the digital twin network entity through the second interface in a data format required by the second interface.

Optionally, the first request is a query request.

Optionally, when the first device includes the first network element and the second network element, the first request includes a network element service discovery request and/or an event exposure service subscription request; and the transceiver 1610 is further configured to perform at least one of the following:
send a network element service discovery request to a fifth network element and receive a network element service discovery response fed back by the fifth network element, wherein the response carries the control plane information;
send an event exposure service subscription request to a sixth network element and receive an event exposure service subscription response fed back by the sixth network element, wherein the response carries the user plane information.

Wherein the fifth network element and the sixth network element belong to the first target network element, and the sixth network element allows subscription to event exposure services.

Optionally, when the first network element is a network storage function network element, the network storage function network element is capable of proactively sending the first information and/or an instruction corresponding to the first information to a second target network element of the digital twin network entity.

Optionally, when the first device includes the third network element and the fourth network element, the first request includes a network element service discovery request and/or an event exposure service subscription request; and the transceiver 1610 is further configured to perform at least one of the following:
send a network element service discovery request to a seventh network element and receive a network element service discovery response fed back by the seventh network element, wherein the network element service discovery response carries the control plane information;
send an event exposure service subscription request to an eighth network element and receive an event exposure service subscription response fed back by the eighth network element, wherein the event exposure service subscription response carries the user plane information;
Wherein the seventh network element and the eighth network element belong to the first target network element, and the eighth network element allows subscription to event exposure services.

Optionally, the transceiver 1610 is further configured to:
after the fourth network element receives the first information sent by the third network element, send the first information and/or an instruction corresponding to the first information to a second target network element;
Wherein the second target network element is a network element of the digital twin network entity.

Optionally, the first information is information generated when a change occurs in the physical network entity.

Optionally, the control plane information includes at least one of the following:
Network element status;
Network element identifier.

Optionally, the user plane information includes at least one of the following:
Forwarding device identifier;
Link information;
Port number;
Port status.

Optionally, the terminal-related information includes at least one of the following:
Terminal status;
Terminal identifier;
Terminal count;
Terminal session count;
Session ID;
User plane path.

In FIG. 16, the bus architecture may include any number of interconnected buses and bridges that connect various circuits, including one or more processors represented by the processor 1600 and the memory represented by the memory 1620. The bus architecture may also connect various other circuits such as peripheral devices, voltage regulators, and power management circuits, all of which are well known in the art and thus are not further described herein. The bus interface provides the interface. The transceiver 1610 may comprise multiple components, including a transmitter and a receiver, and provides units for communication over transmission media with various other devices, the transmission media including wireless channels, wired channels, optical cables, and the like. The processor 1600 is responsible for managing the bus architecture and general processing. The memory 1620 may store data used by the processor 1600 during operation.

The processor 1600 may be a Central Processing Unit (CPU), an Application Specific Integrated Circuit (ASIC), a Field-Programmable Gate Array (FPGA), or a Complex Programmable Logic Device (CPLD), and the processor may adopt a multi-core architecture.

In the device according to the embodiments of the present disclosure, the first device establishes an information exchange bridge between the physical network entity and the digital twin network entity, thereby implementing information interaction between the physical network entity and the digital twin network entity.

It should be noted that the apparatus provided in the embodiments of the present disclosure can implement all the method steps as described in the above method embodiments and achieve the same technical effects. Therefore, the parts identical to those of the method embodiments and their advantageous effects are not described in further detail herein.

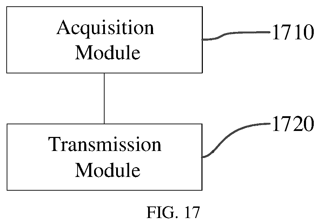

As shown in FIG. 17, an embodiment of the present disclosure further provides an information interaction apparatus, including:
an acquisition module 1710, configured to obtain first information of a physical network entity, the first information including at least one of: control plane information, user plane information, and terminal-related information;
a transmission module 1720, configured to send the first information and/or an instruction corresponding to the first information to a network element of a digital twin network entity.

Wherein the first device includes at least one of the following:
a first management system configured to manage the physical network entity and a second management system configured to manage the digital twin network entity, wherein a first interface is provided between the first management system and the second management system;
an information interaction device, wherein a second interface is provided between the information interaction device and the digital twin network entity, and a third interface is provided between the information interaction device and the physical network entity;
a first network element and a second network element of the digital twin network entity, wherein the first network element is configured to perform network element service discovery for network elements of the physical network entity, and the second network element is configured to subscribe to event exposure services of network elements of the physical network entity;
a third network element of the physical network entity and a fourth network element of the digital twin network entity, wherein the third network element is configured to invoke service discovery and subscribe to event exposure services of network elements of the physical network entity, and the third network element and the fourth network element support information interaction.

Optionally, the acquisition module 1710 is further configured to:
send a first request to a first target network element and receive a first response fed back by the first target network element based on the first request, wherein the first response includes the first information; or
receive a second request sent by the first target network element, wherein the second request includes the first information;
wherein the first target network element is a network element of the physical network entity.

Optionally, the first response or the second request is used to transmit the first information corresponding to all network elements stored by the first target network element.

Optionally, when the first target network element is a session management function network element and the first information includes user plane information, the session management function network element is capable of obtaining user plane topology information.

Optionally, when the first device includes the first management system and the second management system, the transmission module 1720 is further configured to:
send the first information and/or an instruction corresponding to the first information to a network element of the digital twin network entity after the second management system receives the first information sent by the first management system via the first interface.

Optionally, when the information interaction device is configured to manage the physical network entity and the digital twin network entity, or configured to store data information, and the first device includes the information interaction device, the acquisition module 1710 is further configured to:
perform at least one of the following operations via the third interface of the information interaction device:
send the first request and receive the first response;
receive the second request.

Optionally, the transmission module 1720 is further configured to:
send the first information and/or an instruction corresponding to the first information to a network element of the digital twin network entity through the second interface in a data format required by the second interface.

Optionally, the first request is a query request.

Optionally, when the first device includes the first network element and the second network element, the first request includes a network element service discovery request and/or an event exposure service subscription request; and the acquisition module 1710 is further configured to perform at least one of the following:
send a network element service discovery request to a fifth network element and receive a network element service discovery response fed back by the fifth network element, wherein the network element service discovery response carries the control plane information;
send an event exposure service subscription request to a sixth network element and receive an event exposure service subscription response fed back by the sixth network element, wherein the event exposure service subscription response carries the user plane information;
wherein the fifth network element and the sixth network element belong to the first target network element, and the sixth network element allows subscription to event exposure services.

Optionally, when the first network element is a network storage function network element, the network storage function network element is capable of proactively sending the first information and/or an instruction corresponding to the first information to a second target network element of the digital twin network entity.

Optionally, when the first device includes the third network element and the fourth network element, the first request includes a network element service discovery request and/or an event exposure service subscription request; and the acquisition module 1710 is further configured to perform at least one of the following:
send a network element service discovery request to a seventh network element and receive a network element service discovery response fed back by the seventh network element, wherein the network element service discovery response carries the control plane information.
send an event exposure service subscription request to an eighth network element and receive an event exposure service subscription response fed back by the eighth network element, wherein the event exposure service subscription response carries the user plane information;
wherein the seventh network element and the eighth network element belong to the first target network element, and the eighth network element allows subscription to event exposure services.

Optionally, the transmission module 1720 is further configured to:
send the first information and/or an instruction corresponding to the first information to a second target network element after receiving the first information sent by the third network element;
wherein the second target network element is a network element of the digital twin network entity.

Optionally, the first information is information generated when a change occurs in the physical network entity.

Optionally, the control plane information includes at least one of the following:
Network element status;
Network element identifier.

Optionally, the user plane information includes at least one of the following:
Forwarding device identifier;
Link information;
Port number;
Port status.

Optionally, the terminal-related information includes at least one of the following:
Terminal status;
Terminal identifier;
Terminal count;
Terminal session count;
Session ID;
User plane path.

In the apparatus according to the embodiments of the present disclosure, the first device establishes an information exchange bridge between the physical network entity and the digital twin network entity, thereby implementing information interaction between the physical network entity and the digital twin network entity.

It should be noted that the division of units in the embodiments of the present disclosure is illustrative and represents only one logical functional division. Other divisions may be adopted in actual implementations. In addition, each functional unit in the embodiments of the present disclosure may be integrated into one processing unit or exist separately as individual physical units, or two or more units may be integrated into one unit. The above-mentioned integrated units may be implemented in the form of hardware or in the form of software functional units.

When the integrated unit is implemented as a software functional unit and is sold or used as an independent product, it may be stored in a processor-readable storage medium. Based on this understanding, the technical solution of the present disclosure, or the part that contributes to the related technology, or all or part of the technical solution, may be embodied in the form of a software product. The computer software product is stored in a storage medium and includes a plurality of instructions for causing a computer device (which may be a personal computer, server, or network device, etc.) or processor to execute all or part of the steps of the method described in the embodiments of the present disclosure. The aforementioned storage medium includes various media capable of storing program code, such as a USB flash drive, mobile hard disk, Read-Only Memory (ROM), Random Access Memory (RAM), magnetic disk, or optical disk.

It should be noted that the apparatus provided in the embodiments of the present disclosure can implement all the method steps as described in the above method embodiments and achieve the same technical effects. Therefore, parts that are the same as those in the method embodiments and the corresponding advantageous effects are not described in further detail herein.

It should also be noted that the division of units in the embodiments of the present disclosure is illustrative and represents only one logical functional division. Other divisions may be adopted in actual implementations. In addition, each functional unit in the embodiments of the present disclosure may be integrated into one processing unit or exist separately as individual physical units, or two or more units may be integrated into one unit. The above-mentioned integrated units may be implemented in the form of hardware or in the form of software functional units.

When the integrated unit is implemented as a software functional unit and is sold or used as an independent product, it may be stored in a processor-readable storage medium. Based on this understanding, the technical solution of the present disclosure, or the part that contributes to the related technology, or all or part of the technical solution, may be embodied in the form of a software product. The computer software product is stored in a storage medium and includes a plurality of instructions for causing a computer device (which may be a personal computer, server, or network device, etc.) or processor to execute all or part of the steps of the method described in the embodiments of the present disclosure. The aforementioned storage medium includes various media capable of storing program code, such as a USB flash drive, mobile hard disk, Read-Only Memory (ROM), Random Access Memory (RAM), magnetic disk, or optical disk.

It should be noted that the apparatus provided in the embodiments of the present disclosure can implement all the method steps described in the above method embodiments and achieve the same technical effects. Therefore, parts that are the same as those in the method embodiments and the corresponding advantageous effects are not described in further detail herein.

In some embodiments of the present disclosure, a processor-readable storage medium is further provided. The processor-readable storage medium stores program instructions, which are used to cause the processor to execute the information interaction method as described above.

When the program instructions are executed by the processor, all implementations of the method embodiments applicable to the first device side as shown in FIG. 1 can be realized. For the sake of brevity, repeated details are not provided here.

The technical solution provided in the embodiments of the present disclosure can be applied to various systems, especially fifth-generation (5G) mobile communication systems. For example, applicable systems may include: Global System for Mobile communication (GSM), Code Division Multiple Access (CDMA), Wideband Code Division Multiple Access (WCDMA), General Packet Radio Service (GPRS), Long Term Evolution (LTE), LTE Frequency Division Duplex (FDD), LTE Time Division Duplex (TDD), Long Term Evolution Advanced (LTE-A), Universal Mobile Telecommunication System (UMTS), Worldwide Interoperability for Microwave Access (WiMAX), New Radio (NR) in 5G systems, and the like. These systems all include terminal devices and network devices. The system may further include a core network component, such as the Evolved Packet System (EPS) or the 5G System (5GS).

The terminal device involved in the embodiments of the present disclosure may refer to a device that provides voice and/or data connectivity to a user, such as a handheld device with wireless connectivity capabilities or another processing device connected to a wireless modem. In different systems, the terminal device may be referred to differently. For example, in a 5G system, the terminal device may be referred to as User Equipment (UE). A wireless terminal device may communicate with one or more core networks (CN) through a Radio Access Network (RAN). The wireless terminal device may be a mobile terminal device, such as a mobile phone (also referred to as a "cellular" phone), or a computer equipped with a mobile terminal device, including portable, pocket-sized, handheld, built-in, or in-vehicle mobile devices that exchange voice and/or data with the RAN. Examples include Personal Communication Service (PCS) phones, cordless phones, Session Initiation Protocol (SIP) phones, Wireless Local Loop (WLL) stations, and Personal Digital Assistants (PDAs). The wireless terminal device may also be referred to as a system, subscriber unit, subscriber station, mobile station, mobile, remote station, access point, remote terminal, access terminal, user terminal, user agent, or user device. The embodiments of the present disclosure are not limited thereto.

The network device involved in the embodiments of the present disclosure may be a base station, which may include multiple cells serving terminals. Depending on the specific application, the base station may also be referred to as an access point, or a device that communicates with wireless terminal devices via one or more sectors on the air interface in the access network, or by other names. The network device may be used to translate between over-the-air frames and Internet Protocol (IP) packets and serve as a router between the wireless terminal devices and the remainder of the access network, which may include an IP communication network. The network device may also coordinate management of air interface properties. For example, the network device described in the embodiments of the present disclosure may be a Base Transceiver Station (BTS) in a GSM or CDMA system, a Node B in a WCDMA system, an evolved Node B (eNB or e-NodeB) in an LTE system, or a gNB (5G base station) in a next-generation 5G system. It may also be a Home evolved Node B (HeNB), a relay node, a femto base station, or a pico base station. The embodiments of the present disclosure are not limited thereto. In some network architectures, the network device may include a Centralized Unit (CU) node and a Distributed Unit (DU) node, which may be geographically separated in deployment.

The network device and the terminal device may each use one or more antennas to perform Multiple Input Multiple Output (MIMO) transmission. The MIMO transmission may be Single User MIMO (SU-MIMO) or Multi-User MIMO (MU-MIMO). According to the configuration and quantity of antenna combinations, the MIMO transmission may be 2D-MIMO, 3D-MIMO, FD-MIMO, or massive-MIMO, and may also be implemented as diversity transmission, precoding transmission, or beamforming transmission.

It should be understood by those skilled in the art that the embodiments of the present disclosure may be provided as a method, a system, or a computer program product. Therefore, the present disclosure may be implemented as a complete hardware embodiment, a complete software embodiment, or an embodiment combining software and hardware aspects. Moreover, the present disclosure may be provided in the form of a computer program product that is stored on a computer-usable storage medium containing computer-usable program code.

The present disclosure is described with reference to flowcharts and/or block diagrams of methods, apparatuses (systems), and computer program products according to embodiments of the present disclosure. It should be understood that each block of the flowcharts and/or block diagrams, and combinations of blocks in the flowcharts and/or block diagrams, may be implemented by computer-executable instructions. These computer-executable instructions may be provided to a processor of a general-purpose computer, a special-purpose computer, an embedded processor, or other programmable data processing device to produce a machine such that the instructions, when executed by the processor of the computer or other programmable data processing device, create means for implementing the functions specified in the flowchart block or blocks and/or the block diagram block or blocks.

These computer-executable instructions may also be stored in a processor-readable storage medium that can direct a computer or other programmable data processing device to function in a particular manner, such that the instructions stored in the processor-readable storage medium produce an article of manufacture including instruction means which implement the function specified in the flowchart block or blocks and/or the block diagram block or blocks.

These computer-executable instructions may also be loaded onto a computer or other programmable data processing device to cause a series of operational steps to be performed on the computer or other programmable device to produce a computer-implemented process such that the instructions executed on the computer or other programmable device implement the functions specified in the flowchart block or blocks and/or the block diagram block or blocks.

It should be noted that the above-described division of modules is illustrative only and represents merely one form of logical functional division. In actual implementation, all or some modules may be integrated into one physical entity, or may be physically separated. These modules may be implemented entirely in the form of software invoked by a processing element, entirely in the form of hardware, or partially in software and partially in hardware. For example, the determining module may be implemented as a separately established processing element or integrated into a chip of the aforementioned device. Additionally, it may be stored as program code in the memory of the device and invoked and executed by a processing element of the device to perform the functions of the determining module. Other modules may be implemented in a similar manner. Furthermore, the modules may be fully or partially integrated or independently implemented. The processing element described herein may be an integrated circuit with signal processing capability. During implementation, the above-described steps or modules of the method may be completed by integrated logic circuits in the processing element or by instructions in software form.

For example, each module, unit, subunit, or submodule may be implemented as one or more integrated circuits configured to perform the above-described methods, such as one or more Application Specific Integrated Circuits (ASICs), one or more Digital Signal Processors (DSPs), or one or more Field Programmable Gate Arrays (FPGAs). Alternatively, when a module is implemented in the form of program code scheduled by a processing element, the processing element may be a general-purpose processor such as a Central Processing Unit (CPU) or any other processor capable of invoking program code. Furthermore, these modules may be integrated together and implemented in the form of a System-on-a-Chip (SoC).

The terms "first," "second," and the like in the specification and claims of the present disclosure are used for distinguishing similar objects and are not intended to imply any specific order or sequence. It should be understood that data so labeled may be exchanged as appropriate to allow embodiments of the present disclosure as described herein to be implemented in sequences other than those illustrated or described herein. Additionally, the terms "include" and "have," and variations thereof, are intended to be inclusive, meaning that the items listed thereafter are not the only items that may be present. A process, method, system, product, or device that includes a list of steps or components is not limited to only those steps or components, but may also include other steps or components not explicitly listed or inherent to such process, method, system, product, or device. Furthermore, the use of "and/or" in the specification and claims is intended to represent that any of the listed elements may be used individually or in combination. For example, "A and/or B and/or C" covers the seven possibilities of A alone, B alone, C alone, A and B, B and C, A and C, and A, B, and C together. Likewise, "at least one of A and B" should be understood to mean A alone, B alone, or both A and B.

It is apparent that various modifications and alterations may be made to the present disclosure by those skilled in the art without departing from the spirit and scope of the present disclosure. In such a case, if such modifications and alterations fall within the scope of the claims of the present disclosure and their equivalents, the present disclosure is also intended to cover such modifications and alterations.

## Claims

1. A method for information interaction, comprising:
obtaining, by a first device, first information of a physical network body, wherein the first information comprises at least one of the following: control plane information, user plane information, and terminal-related information;
transmitting, by the first device, the first information and/or an instruction corresponding to the first information to a network element of a digital twin network body;
wherein the first device comprises at least one of the following:
a first management system configured to manage the physical network body and a second management system configured to manage the digital twin network body, wherein a first interface is provided between the first management system and the second management system;
an information interaction device, wherein a second interface is provided between the information interaction device and the digital twin network body, and a third interface is provided between the information interaction device and the physical network body;
a first network element and a second network element of the digital twin network body, wherein the first network element is configured to perform network element service discovery on network elements of the physical network body, and the second network element is configured to subscribe to event exposure services of the network elements of the physical network body;
a third network element of the physical network body and a fourth network element of the digital twin network body, wherein the third network element is configured to invoke service discovery and subscribe to event exposure services from the network elements of the physical network body, and the third network element and the fourth network element support information interaction.

2. The method according to claim 1, wherein the obtaining, by the first device, the first information of the physical network body comprises:
transmitting, by the first device, a first request to a first target network element and receiving a first response from the first target network element based on the first request, wherein the first response comprises the first information; or
receiving, by the first device, a second request transmitted by the first target network element, wherein the second request comprises the first information;
wherein the first target network element is a network element of the physical network body.

3. The method according to claim 2, wherein the first response or the second request is used to transmit all of the first information corresponding to network elements stored in the first target network element.

4. The method according to claim 2, wherein the first target network element is a session management function network element, and when the first information comprises user plane information, the session management function network element is capable of obtaining user plane topology information.

5. The method according to claim 2, wherein when the first device comprises the first management system and the second management system,
the transmitting, by the first device, the first information to the network element of the digital twin network body comprises:
transmitting, by the second management system, the first information and/or the instruction corresponding to the first information to the network element of the digital twin network body after receiving the first information transmitted by the first management system via the first interface.

6. The method according to claim 2, wherein when the information interaction device is configured to manage the physical network body and the digital twin network body, or is configured to store data information, and the first device comprises the information interaction device,
the obtaining, by the first device, the first information of the physical network body comprises:
performing, by the information interaction device, at least one of the following via the third interface:
transmitting the first request and receiving the first response;
receiving the second request.

7. The method according to claim 6, wherein the transmitting, by the first device, the first information and/or the instruction corresponding to the first information to the network element of the digital twin network body comprises:
transmitting, by the information interaction device, the first information and/or the instruction corresponding to the first information to the network element of the digital twin network body in a data format required by the second interface via the second interface.

8. The method according to claim 5 or 6, wherein the first request is a query request.

9. The method according to claim 2, wherein when the first device comprises the first network element and the second network element, the first request comprises a network element service discovery request and/or an event exposure service subscription request;
the first device transmits the first request to the first target network element and receives a first response from the first target network element based on the first request, comprising at least one of the following:
transmitting, by the first network element, a network element service discovery request to a fifth network element and receiving a network element service discovery response from the fifth network element, wherein the network element service discovery response carries the control plane information;
transmitting, by the second network element, an event exposure service subscription request to a sixth network element and receiving an event exposure service subscription response from the sixth network element, wherein the event exposure service subscription response carries the user plane information;
wherein the fifth network element and the sixth network element belong to the first target network element, and the sixth network element allows event exposure service subscription.

10. The method according to claim 9, wherein when the first network element is a network storage function network element, the network storage function network element is configured to proactively transmit the first information and/or the instruction corresponding to the first information to a second target network element of the digital twin network body.

11. The method according to claim 2, wherein the first device comprises a third network element and a fourth network element, and the first request comprises a network element service discovery request and/or an event exposure service subscription request;
wherein the first device is configured to transmit the first request to a first target network element and receive a first response transmitted by the first target network element based on the first request, comprising at least one of:
transmitting, by the third network element, the network element service discovery request to a seventh network element and receiving a network element service discovery response transmitted by the seventh network element, wherein the network element service discovery response carries the control plane information;
transmitting, by the third network element, the event exposure service subscription request to an eighth network element and receiving an event exposure service subscription response transmitted by the eighth network element, wherein the event exposure service subscription response carries the user plane information;
wherein the seventh network element and the eighth network element belong to the first target network element, and the eighth network element is permitted to subscribe to the event exposure service.

12. The method according to claim 11, wherein transmitting, by the first device, the first information and/or the instruction corresponding to the first information to a network element of the digital twin network entity comprises:
transmitting, by the fourth network element, the first information and/or the instruction corresponding to the first information to a second target network element after receiving the first information transmitted by the third network element;
wherein the second target network element is a network element of the digital twin network entity.

13. The method according to claim 1, wherein the first information is information generated when the physical network entity undergoes a change.

14. The method according to any one of claims 1 to 13, wherein the control plane information comprises at least one of:
a status of a network element;
an identifier of a network element.

15. The method according to any one of claims 1 to 13, wherein the user plane information comprises at least one of:
a forwarding device identifier;
link information;
a port number;
a port status.

16. The method according to any one of claims 1 to 13, wherein the terminal-related information comprises at least one of:
a terminal status;
a terminal identifier;
a terminal count;
a terminal session count;
a session ID;
a user plane path.

17. An information interaction apparatus applied to a first device, comprising: a memory, a transceiver, and a processor;
wherein the memory is configured to store program instructions;
the transceiver is configured to transmit and receive data under control of the processor; the processor is configured to read the program instructions from the memory;
the transceiver is further configured to:
obtain first information of a physical network entity, wherein the first information comprises at least one of: control plane information, user plane information, and terminal-related information;
transmit the first information and/or an instruction corresponding to the first information to a network element of a digital twin network entity;
wherein the first device comprises at least one of:
a first management system configured to manage the physical network entity and a second management system configured to manage the digital twin network entity, wherein a first interface is provided between the first management system and the second management system;
an information interaction device, wherein a second interface is provided between the information interaction device and the digital twin network entity, and a third interface is provided between the information interaction device and the physical network entity;
a first network element and a second network element of the digital twin network entity, wherein the first network element is capable of performing network element service discovery on a network element of the physical network entity, and the second network element is capable of subscribing to event exposure services from a network element of the physical network entity;
a third network element of the physical network entity and a fourth network element of the digital twin network entity, wherein the third network element is capable of invoking service discovery and subscribing to event exposure services from a network element of the physical network entity, and information interaction is supported between the third network element and the fourth network element.

18. An information interaction apparatus applied to a first device, comprising:
an obtaining module configured to obtain first information of a physical network entity, wherein the first information comprises at least one of: control plane information, user plane information, and terminal-related information;
a transmitting module configured to transmit the first information and/or an instruction corresponding to the first information to a network element of a digital twin network entity;
wherein the first device comprises at least one of:
a first management system and a second management system, wherein a first interface is provided therebetween;
an information interaction device, wherein a second interface is provided between the information interaction device and the digital twin network entity, and a third interface is provided between the information interaction device and the physical network entity;
a first network element and a second network element of the digital twin network entity;
a third network element of the physical network entity and a fourth network element of the digital twin network entity.

19. A processor-readable storage medium storing a computer program, wherein the computer program is configured to cause a processor to perform the information interaction method according to any one of claims 1 to 16.
